# EUROPEAN PATENT SPECIFICATION

(11) **EP 1 197 287 B1**
(45) Date of publication and mention of the grant of the patent: **04.08.2004**
(21) Application number: 01104616.6
(22) Date of filing: 23.02.2001
(51) Int. Cl.: B23K 26/10, B23K 26/26

(54) **Apparatus for laser welding longitudinal reinforcing members onto aluminium panels**
Vorrichtung zum Laserschweissen von Längsverstärkungselementen auf Aluminiumplatten
Appareil pour souder au laser des éléments renforcement longitudinaux sur des panneaux en aluminium

(30) Priority: 13.10.2000 IT TO000960
(43) Date of publication of application: 17.04.2002
(73) Proprietor: Bisiach, Bruno, 10078 Venaria (TO) (IT)
(72) Inventor: Bisiach, Bruno, 10078 Venaria (TO) (IT)
(74) Representative: Robba, Pierpaolo

(56) References cited:
- US-A- 5 142 118
- US-A- 5 841 098

## Description

The present invention relates to an apparatus for laser welding longitudinal reinforcing members onto aluminium panels.

More particularly, the invention concerns an apparatus for welding the so-called "stringers" onto aluminium panels for preparing parts of an aircraft fuselage.

To construct aircraft fuselages, use is made of very thin aluminium panels, to keep weight limited, strengthened with longitudinal reinforcing members, also of aluminium, called "stringers".

According to known techniques, the stringers, which may have different cross-sectional shapes, for instance the shape of a T or of an upset J, are secured to the aluminium panels by riveting, if they have a suitable flap, or, according to more recent techniques, by laser welding.

It is known that laser welding of aluminium parts requires that the parts be kept in close contact with each other. Actually, the focus of the laser beam has to be located in the region of separation between the parts, with a very narrow tolerance, of about 0.2 mm. Unfortunately, since the aluminium panels almost never are perfectly planar and the stringers, because of their reduced cross-sectional size, are not rigid members, it may happen that in some regions the parts to be welded are spaced apart.

Thus, during welding, it is necessary to keep the stringer in correct position and at the same time to press both parts against each other, so as to eliminate regions where the stringer is spaced apart from the panel.

Some automatic laser welding apparatuses have been proposed to solve the problem of how to weld the stringers with the fuselage panels in secure and efficient manner, an example being disclosed in US patent 5,841,098.

US patent 5,841,098 discloses an apparatus for laser welding stringers onto aluminium panels, which includes a mechanical roller guide system maintaining the stringer in vertical position while simultaneously pressing it against the panel, and an electronic laser beam guide system adjusting the laser direction and focus according to information supplied by weld point locating sensors.

Yet the apparatus disclosed in the aforementioned patent is very complex. Actually it requires technologically very advanced sensors and a very powerful signal processing system; moreover both laser heads have to be equipped with a very precise system for vertical displacement so as to be able to follow possible stringer deviations along the path. In effect, the robotised arm carrying the whole of the apparatus follows a path predetermined by the program that has been set, and following the weld line is just a task of the laser head displacement system, guided by the sensors.

The present invention therefore aims to solve the problem of how to simplify the process of welding stringers onto aluminium panels, while ensuring a high level of welding reliability and precision.

The above and other objects are achieved by the welding apparatus as claimed in the appended claims.

Advantageously, according to the invention, a guide system for the stringers is provided that, besides keeping the welding direction correct, automatically keeps constant the level of the laser welding heads over the welding plane.

Thus, when the guide system is located on the stringer, thereby exerting a certain pressure thereagainst, the weld plane is automatically detected, without need to use specific sensors.

Advantageously, during welding, suitable detectors monitor the weld quality in real time and if necessary, in case of serious defects, stop the automatic welding process.

The above and other objects of the invention will become more apparent from the description of a preferred embodiment, with reference to the accompanying drawings, in which:
- Fig. 1 is a front view of an apparatus made in accordance with the present invention for laser welding longitudinal reinforcing members onto aluminium panels;
- Fig. 2a shows an enlarged detail of the guide system of the longitudinal reinforcing members in the apparatus shown in Fig. 1;
- Fig. 2b shows an enlarged detail of the guide system of the longitudinal reinforcing members in the apparatus shown in Fig. 1, in an alternative embodiment;
- Fig. 3 is a perspective view of the guide system of the longitudinal reinforcing members in the apparatus shown in Fig. 1;
- Fig. 4 is an exploded view of the apparatus shown in Fig. 1.

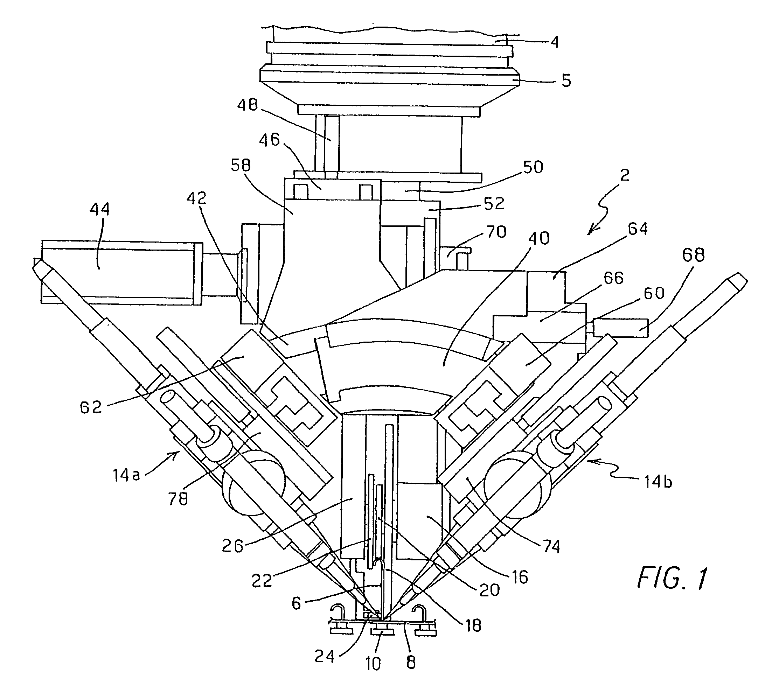

Referring to Fig. 1, an apparatus 2, which can be coupled with a robotised arm 4, 5 for the automatic laser welding of a longitudinal reinforcing member 6, a so-called stringer, onto an aluminium panel 8, comprises a wheel and roller system for positioning and clamping longitudinal reinforcing member 6 onto panel 8, and a pair of laser welding heads 14a, 14b.

Apparatus 2 has a vertical central body made of two parts, namely a parallelepiped-shaped internal part 50, secured to robotised arm 4, 5, and an internally hollow external part 52 acting as a support for the wheel and roller system and for laser welding heads 14a, 14b. A spring and shock-absorber system, not shown in the drawing, is arranged between the two parts 50, 52 and allow the robotised arm to keep apparatus 2 pressed against panel 8 during welding, thereby ensuring the correct joint between the parts being welded, as described in detail hereinafter.

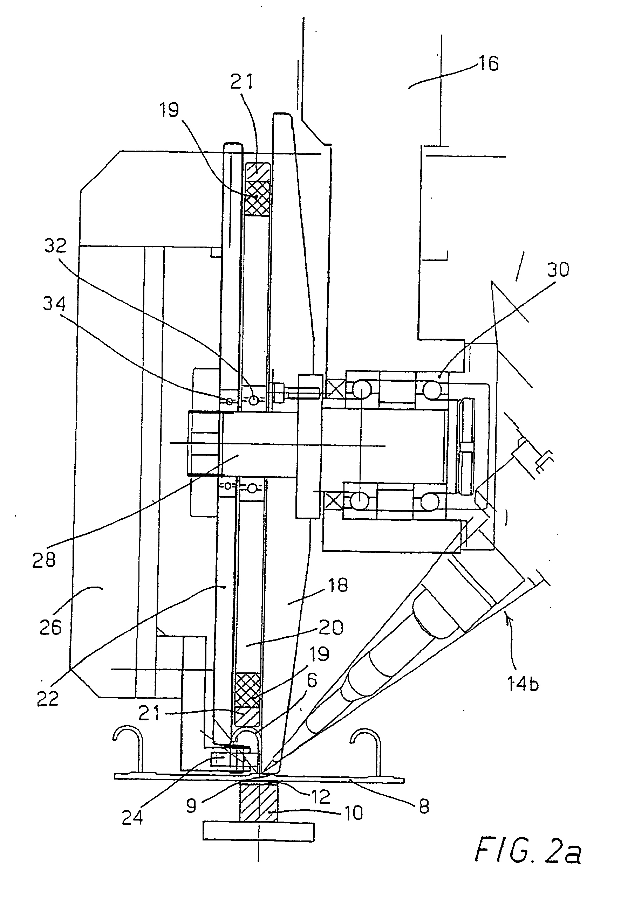

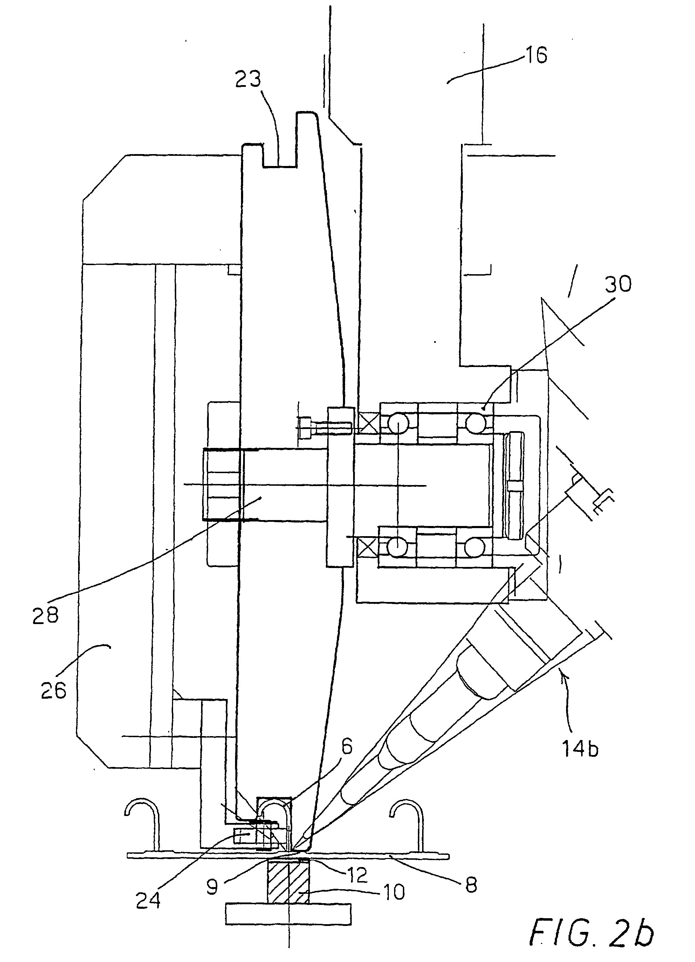

The wheel and roller system, shown in detail in Fig. 2a, comprises a vertical arm support 16 that is fastened at its upper end to external part 52 of the central body and carries, at its lower end, a horizontal rotation axis 28 mounted on ball bearings 30.

A first disc-shaped wheel 18, a second disc-shaped wheel 20 and a third disc-shaped wheel 22 are mounted, in the order, onto horizontal rotation axis 28.

The first disc-shaped wheel 18, which during welding rests upon panel 8, or more precisely onto a plane welding track 9 formed on panel 8 to receive longitudinal reinforcing member 6, laterally supports a first side of the longitudinal reinforcing member 6.

The second disc-shaped wheel 20, equipped with a central ball bearing 32 which allowing its idle rotation about horizontal axis 28, is to vertically press the longitudinal reinforcing member or stringer 6 against aluminium panel 8. To exert a correct pressure during welding, wheel 20 has, along its external circumference, an inner ring 21 of elastomeric material which becomes partly deformed when contacting the upper surface of longitudinal reinforcing member 6.

Preferably, in order to protect the inner elastomeric ring 21 from the heat developed during welding, an outer metal ring 19 is provided on the periphery of the ring 21. Preferably, the surface of the second disc-shaped wheel 20 in contact with the inner elastomeric ring 21 is knurled so as to ensure a grip between the wheel 20 and the inner elastomeric ring 21.

It is to be noted that the grip between the wheel 20 and the inner elastomeric ring 19 allows the inner ring 19 to rotate with respect to the wheel 20 when a force is applied to the outer metal ring 19. Due to this effect, wear over time of the inner elastomeric ring 21 is prevented.

The third disc-shaped wheel 22, also equipped with a central ball bearing 34, laterally supports the upper portion of the other side of longitudinal reinforcing member 6.

Moreover, to wholly clamp member 6, vertical axis rollers 24, for instance four rollers 24 arranged side by side, are provided which thrust the member, at its lower portion, against the first disc-shaped wheel 18. The rollers 24 are carried by a support or arm 26, of which the upper end is secured to a motor-driven slide 38 that can horizontally slide in a direction perpendicular to the welding direction. The same slide has also secured thereto one of the two welding heads, namely head 14a.

Thus member 6 is laterally supported and simultaneously pressed against plane welding track 9 on panel 8, to avoid any possible gap between the two parts which could give rise to an imperfect welding.

To contrast the pressure exerted by the wheel and roller system onto longitudinal reinforcing member 6 and on panel 8 itself, panel 8 is supported at its bottom face by a support member 10, comprising a block of elastomeric material longitudinally arranged below plane welding track 9.

Elastomeric block 10 is coated on its top surface by a metal sheet 12, arranged in correspondence of the contact region with aluminium panel 8 and protecting block 10 from the heat developed during welding.

The horizontal displacement of slide 38, driven by a controlled-axis motor 44, allows moving both rollers 24 and head 14a away from longitudinal reinforcing member 6, thereby allowing the whole apparatus 2 to be lowered and raised, without interfering with the curved upper portion of longitudinal reinforcing member 6.

With reference to fig. 2b, which refers to an alternative embodiment of the present invention, it may be appreciated that the first 18, second 20 and third wheels 22 are respectively a first, a second and a third portion of a single wheel 23 shaped so that the radius of the first portion of the single wheel 23 is greater than the radius of its third portion, and that the radius of its third portion is greater than the radius of its second portion.

Similarly, the wheels 18 and 20 or the wheels 22 and 20, can respectively be a first and a second portion of a single wheel, not shown in figure, and shaped so that the radius of the first portion of the single wheel is greater than the radius of its second portion.

It can be further observed that when the member 6 is low, it is supported by the wheels 18, 20 and the rollers 24, the wheel 22 being unnecessary.

The disc-shaped wheels 18, 20 and 22, the single wheel 23 and the vertical axis rollers 24 are idle and, during welding, they follow the movements of apparatus 2 imposed by robotised arm 4, 5.

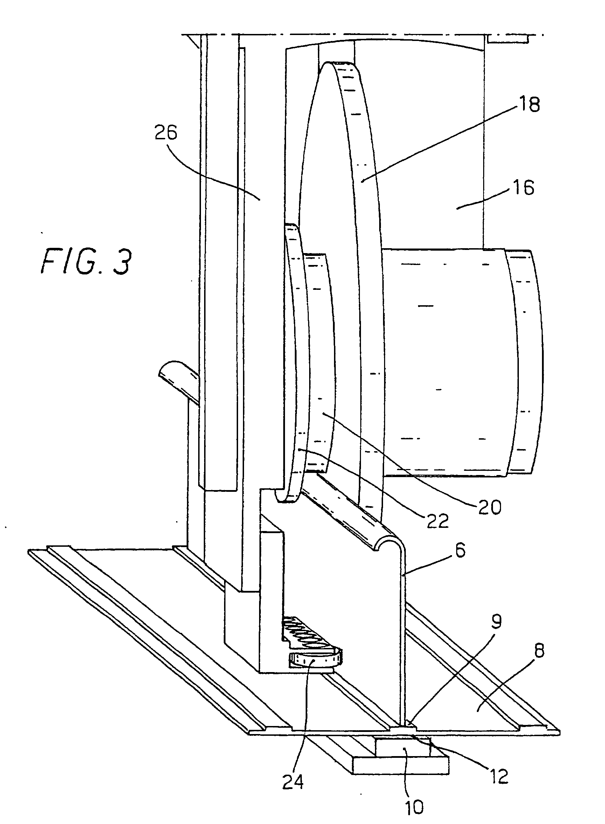

Fig. 3 shows in detail the wheel and roller system during welding of a longitudinal reinforcing member 6 onto an aluminium panel 8. The drawing clearly shows that member 6 is "compelled" by disc-shaped wheels 18, 20 and 22 and by rollers 24 to keep the correct position onto welding track 9, while being at the same time vertically pressed. During forward movement of the apparatus, both the wheels and the rollers rotate and roll over the members 6 onto which they rest, without opposing resistance to the forward movement.

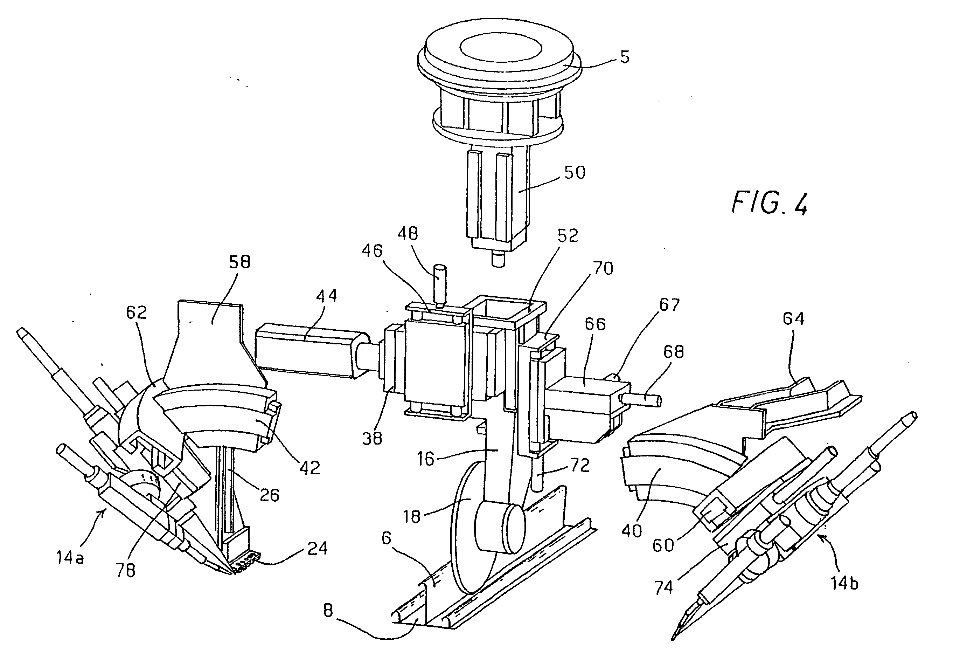

Fig. 4 is instead an exploded view of apparatus 2, in which the major components have been separated for a better clarity. More particularly, a locking device 5 is shown, which is used to secure apparatus 2 to the robot arm. Below that device there is arranged internal part 50 of the vertical central body, provided with sliding guides capable of engaging the inside of the corresponding external hollow part 52.

External part 52 has on its external surface, on one side a two-axes sliding guide, where a first horizontal axis 38 is driven by motor 44, and a second vertical axis 46, perpendicular to the first one, is manually operable through a handle 48. The first welding head 14a is mounted on such sliding guide by means of a plate 58.

A second side of external part 52, orthogonal to the first side, houses a second three-axes sliding guide, having a vertical movement 70, manually operable through handle 72, and a two-axes horizontal movement 66, manually operable through handles 67, 68. The second welding head 14b is mounted onto horizontal movement 66 by means of a plate 64.

Manual adjustments of the sliding guides are used in a calibration phase, to precisely position laser welding heads.

Each welding head is in turn equipped with two half-circular guides 42, 62 and 40, 60, which allow modifying the laser beam inclination relative to the horizontal plane of panel 8 being welded and the laser beam inclination relative to a vertical plane perpendicular to the welding direction, respectively, and with two linear guides 74, 78 which allow changing the distance between lasers and welding point.

Moreover, to check that no defect is present during welding, apparatus 2 includes an electronic detector, e.g. a television camera, not shown in the drawing, which allows monitoring in real time the quality of the welding carried out and, if necessary, stopping the process.

## Claims

1. An apparatus (2), to be coupled with a robotised arm (4), for laser welding a longitudinal reinforcing member (6) onto an aluminium panel (8), the apparatus being of a kind including a wheel and/or roller system for positioning and clamping said longitudinal reinforcing member (6), and at least one guide system (14a, 14b) for a laser beam capable of effecting welding between the panel (8) and the longitudinal reinforcing member (6), **characterised in that** said wheel and/or roller system for positioning and clamping said longitudinal reinforcing member includes:
- a first disc-shaped wheel (18), with horizontal axis, arranged to laterally support a first side of said longitudinal reinforcing member (6);
- a second disc-shaped wheel (20), with horizontal axis, arranged to vertically press said longitudinal reinforcing member (6) against said aluminium panel (8);
- a set of rollers (24) with vertical axes, arranged side by side to laterally support a second side of said longitudinal reinforcing member (6) opposed to said first side.

2. An apparatus according to claim 1, **characterised in that** it further comprises a third disc-shaped wheel (22), with horizontal axis, arranged to laterally support an upper portion of the second side of said longitudinal reinforcing member (6).

3. An apparatus according to claim 1, **characterised in that** said first (18) and second (20) wheels are respectively a first and a second portion of a single wheel shaped so that the radius of the first portion of said single wheel is greater than the radius of its second portion.

4. An apparatus according to claim 3, **characterised in that** it further comprises a third disc-shaped wheel (22), with horizontal axis, arranged to laterally support an upper portion of the second side of said longitudinal reinforcing member (6).

5. An apparatus according to claim 2, **characterised in that** said first (18), second (20) and third (22) wheels are respectively a first, second and third portion of a single wheel (23) shaped so that the radius of the first portion of said single wheel (23) is greater than the radius of its third portion, and the radius of its third portion is greater than the radius of its second portion.

6. An apparatus according to claim 2, **characterised in that** said second (20) and third (22) wheels are respectively a first and a second portion of a single wheel shaped so that the radius of the second portion of said single wheel is greater than the radius of its first portion.

7. An apparatus according to any of the preceding claims, **characterised in that** said second disc-shaped wheel (20) is equipped, along its external circumference, in contact with said longitudinal reinforcing member (6), with an inner ring (21) of elastomeric material.

8. An apparatus according to claim 7, **characterised in that** said inner ring (21) is provided with an outer metal ring (19) on its periphery.

9. An apparatus according to claim 8, **characterised in that** the surface of said second wheel (20) in contact with said inner ring (21) is knurled.

10. An apparatus according to any of the preceding claims, **characterised in that** said first disc-shaped wheel (18) rests, during welding, onto a plane welding track (9) formed on said aluminium panel (8) to receive said longitudinal reinforcing member (6), and **in that** said at least one guide system (14a, 14b) for a laser welding beam is coupled with a support (16) of the axis (28) of said first disc-shaped wheel (18), so as to follow possible level variations of the plane welding track (9) detected by said first disc-shaped wheel (18).

11. An apparatus according to claim 10, **characterised in that** said aluminium panel (8) is supported, during welding, by a support member (10) comprising at least one block of elastomeric material longitudinally arranged below said plane welding track (9), so as to oppose the pressure exerted by said wheels and/or roller system.

12. An apparatus according to claim 11, **characterised in that** said block of elastomeric material (10) is coated on its top surface by a metal sheet (12), in correspondence with the contact region with said aluminium panel (8).

13. An apparatus according to any of the claims 10 to 12, **characterised in that** it is coupled with said robotised arm (4) through a shock-absorbing system (50, 52) that allows, by adjusting the vertical position of said robotised arm (4), keeping said first disc shaped wheel (18) steadily in contact with said plane welding track (9).

14. An apparatus according to any of the preceding claims, **characterised in that** said vertical axis rollers (24) are carried by a support (26) that can horizontally slide in a direction perpendicular to the welding direction, so that the rollers can move away from the longitudinal reinforcing member (6), thereby allowing the whole apparatus (2) to be lowered and raised, without interfering with a curved upper portion of the same longitudinal reinforcing member (6).

15. An apparatus according to any of the preceding claims, **characterised in that** said wheel/wheels (18, 20, 22, 23) rotate about a common rotation axis (28).

16. An apparatus according to any of the preceding claims, **characterised in that** said wheel/wheels (18, 20, 22, 23) and said vertical axis rollers (24) are idle.

17. An apparatus according to any of the preceding claims, **characterised in that** said at least one guide system (14a, 14b) for a laser welding beam comprises a first (14a) and a second (14b) welding head, arranged laterally of the direction of the longitudinal reinforcing member (6) and coupled with a support (52) of the wheel and/or roller system for positioning and clamping the longitudinal reinforcing member (6).

18. An apparatus according to claim 17, **characterised in that** said first (14a) and second (14b) welding heads are coupled with said support (52) through a plurality of sliding guides allowing, during a calibration step of the apparatus, adapting the apparatus to the model and the size of the longitudinal member (6) to be welded.

19. An apparatus according to any preceding claim, **characterised in that** it comprises at least one electronic detector monitoring in real time the quality of the welding carried out and generating a signal for stopping the welding process if it detects a defect in the welding.

## Patentansprüche

1. Eine mit einem Roboterarm (4) zu kuppelnde Vorrichtung (2) zum Laserschweißen eines Längsverstärkungselementes (6) auf einer Aluminiumplatte (8), wobei der Vorrichtungstyp ein Rad und/oder ein Rollensystem zum Positionieren und Klemmen jenes Längsverstärkungselements (6) einschließt, sowie mindestens ein Führungssystem (14a, 14b) für einen Laserstrahl, das imstande ist, das Schweißen von Platte (8) und Längsverstärkungselement (6) durchzuführen,
**dadurch gekennzeichnet, daß** jenes Rad und/oder Rollensystem zum Positionieren und Klemmen jenes Längsverstärkungselements Folgendes umfaßt:
- ein erstes scheibenförmiges Rad (18) mit horizontaler Achse, angeordnet zur seitlichen Abstützung einer ersten Seite jenes Längsverstärkungselements (6);
- ein zweites scheibenförmiges Rad (20) mit horizontaler Achse, angeordnet zum senkrechten Anpressen jenes Längsverstärkungselements (6) an jene Aluminiumplatte (8),
- ein Rollensatz (24) mit vertikalen Achsen, angeordnet Seite an Seite zum seitlichen Abstützen einer zweiten, der ersten Seite gegenüberliegenden Seite jenes Längsverstärkungselements (6).

2. Vorrichtung nach Anspruch 1,
**dadurch gekennzeichnet, daß** sie ferner ein drittes scheibenförmiges Rad (22) mit horizontaler Achse aufweist, das zur seitlichen Abstützung eines oberen Teils der zweiten Seite jenes Längsverstärkungselements (6) angeordnet ist.

3. Vorrichtung nach Anspruch 1,
**dadurch gekennzeichnet, daß** jenes erste (18) und zweite (20) Rad jeweils ein erster und zweiter Bestandteil eines einzigen Rades sind, das so geformt ist, daß der Radius des ersten Bestandteils des einzigen Rades größer ist als der Radius des zweiten Bestandteils.

4. Vorrichtung nach Anspruch 3,
**dadurch gekennzeichnet, daß** sie ferner eine drittes scheibenförmiges Rad (22) mit horizontaler Achse aufweist, das zur seitlichen Abstützung eines oberen Teils der zweiten Seite jenes Längsverstärkungselements (6) angeordnet ist.

5. Vorrichtung nach Anspruch 2,
**dadurch gekennzeichnet, daß** jenes erste (18), zweite (20) und dritte (22) Rad jeweils ein erster, zweiter und dritter Bestandteil eines einzigen Rades (23) sind, das so geformt ist, daß der Radius des ersten Bestandteils jenes Radblocks (23) größer ist als der Radius des dritten Bestandteils und der Radius des dritten Bestandteils größer ist als der Radius des zweiten Bestandteils.

6. Vorrichtung nach Anspruch 2,
**dadurch gekennzeichnet, daß** jenes zweite (20) und dritte (22) Rad jeweils ein erster und zweiter Bestandteil eines einzigen Rades sind, das so geformt ist, daß der Radius des zweiten Bestandteils jenes Radblocks größer ist als der Radius seines ersten Bestandteils.

7. Vorrichtung nach einem der vorhergehenden Ansprüche,
**dadurch gekennzeichnet, daß** jenes zweite scheibenförmige Rad (20) längs seines äußeren Umfangs und in Kontakt mit jenem Längsverstärkungselement (6) mit einem Innenring (21) aus Elastomer bestückt ist.

8. Vorrichtung nach Anspruch 7,
**dadurch gekennzeichnet, daß** jener innere Ring (21) an seinem Umfang mit einem äußeren Metallring (19) ausgestattet ist.

9. Vorrichtung nach Anspruch 8,
**dadurch gekennzeichnet, daß** die Oberfläche des, jenen Innenring (21) kontaktierenden zweiten Rades (20) gerändelt ist.

10. Vorrichtung nach einem der vorhergehenden Ansprüche,
**dadurch gekennzeichnet, daß** jenes erste scheibenförmige Rad (18) während des Schweißens auf einem auf der Aluminiumplatte (8) ausgebildeten ebenen Schweißprofil (9) aufsitzt und daß wenigstens ein Führungssystem (14a, 14b) für einen Laserschweißstrahl mit einem Support (16) der Achse (28) jenes ersten scheibenförmigen Rades (18) verbunden ist, um möglichen, von jenem ersten scheibenförmigen Rad (18) aufgespürten Höhenunterschieden des ebenen Schweißprofils (9) zu folgen.

11. Vorrichtung nach Anspruch 10,
**dadurch gekennzeichnet, daß** jene Aluminiumplatte (8) während des Schweißens von einem Stützelement (10) abgestützt wird, das wenigstens eine unter jenem ebenen Schweißprofil (9) in Längsrichtung angeordnete Auflage aus Elastomer aufweist, um den von jenen Rädern und/oder Rollensystemen ausgeübten Druck aufzunehmen.

12. Vorrichtung nach Anspruch 11,
**dadurch gekennzeichnet, daß** jene Auflage aus Elastomer (10) an ihrer obenliegenden Oberfläche in Zusammenhang mit dem Kontaktbereich mit jener Aluminiumplatte (8) mit einem Metallband (12) beschichtet ist.

13. Vorrichtung nach einem der Ansprüche 10 bis 12,
**dadurch gekennzeichnet, daß** sie mit jenem Roboterarm (4) durch ein Stoßdämpfersystem (50, 52) verbunden ist, das durch Nachführung der Vertikallage jenes Roboterarms (4) ermöglicht, jenes erste scheibenförmige Rad (18) ständig in Kontakt mit jenem ebenen Schweißprofil (9) zu halten.

14. Vorrichtung nach einem der vorhergehenden Ansprüche,
**dadurch gekennzeichnet, daß** jene Rollen (24) mit vertikaler Achse von einem Support (26) getragen werden, der in einer zu der Schweißrichtung senkrechten Richtung horizontal zu gleiten vermag, so daß sich die Rollen von dem Längsverstärkungselement (6) wegbewegen können und dadurch die ganze Vorrichtung (2) abgesenkt und angehoben werden kann, ohne mit einem gebogenen oberen Bereich dieses Längsverstärkungselements (6) zu kollidieren.

15. Vorrichtung nach einem der vorhergehenden Ansprüche,
**dadurch gekennzeichnet, daß** jenes Rad/jene Räder (18, 20, 22, 23) um eine gemeinsame Achse (28) rotieren.

16. Vorrichtung nach einem der vorhergehenden Ansprüche,
**dadurch gekennzeichnet, daß** jenes Rad/jene Räder (18, 20, 22, 23) und jene Rollen (24) mit vertikaler Achse leer laufen.

17. Vorrichtung nach einem der vorhergehenden Ansprüche,
**dadurch gekennzeichnet, daß** jenes wenigstens eine Führungssystem (14a, 14b) für einen Laserschweißstrahl einen ersten (14a) und einen zweiten (14b), seitlich der Richtung des Längsverstärkungselements (6) angeordneten Schweißkopf aufweist, der auch mit einem Support (52) des Rad- und/oder Rollensystems zum Positionieren und Spannen des Längsverstärkungselements (6) verbunden ist.

18. Vorrichtung nach Anspruch 17,
**dadurch gekennzeichnet, daß** jene ersten (14a) und zweiten (14b) Schweißköpfe mit jenem Support (52) durch eine Vielzahl von Gleitführungen verbunden sind, die es während eines Kalibriervorgangs der Vorrichtung ermöglichen, die Vorrichtung an den Typ und die Größe des zu schweißenden Längsverstärkungselements (6) anzupassen.

19. Vorrichtung nach einem der vorhergehenden Ansprüche,
**dadurch gekennzeichnet, daß** sie wenigstens ein in Echtzeit die Qualität des ausgeführten Schweißens überwachendes elektronisches Meßgerät aufweist, das auch ein Signal für den Abbruch des Schweißvorgangs erzeugt, wenn es einen Schweißfehler entdeckt.

## Revendications

1. Appareil (2), à être couplé avec un bras robotisé (4), pour souder au laser un élément de renforcement longitudinal (6) sur un panneau en aluminium (8), ledit appareil étant du type comprenant un système à roues et/ ou à rouleaux pour positionner et serrer ledit élément de renforcement longitudinal (6), et au moins un système de guidage (14a, 14b) pour un faisceau laser capable de effectuer le soudage entre le panneau (8) et l'élément de renforcement longitudinal (6), **caractérisé en ce que** ledit système à roues et/ou rouleaux pour positionner et serrer ledit élément de renforcement longitudinal comprend:
- une première roue discoïdale (18), avec axe horizontal, disposée de façon à supporter latéralement un premier côté dudit élément de renforcement longitudinal (6);
- une deuxième roue discoïdale (20), avec axe horizontal, disposée de façon à presser verticalement ledit élément de renforcement longitudinal (6) contre ledit panneau en aluminium (8);
- une série de rouleaux (24), avec axe vertical, disposés bord à bord pour supporter latéralement un deuxième côté dudit élément de renforcement longitudinal, opposé audit premier côté.

2. Appareil selon la revendication 1, **caractérisé en ce qu'**il comprend en outre une troisième roue discoïdale (22), avec axe horizontal, disposée de façon à supporter latéralement une portion supérieure du deuxième côté dudit élément de renforcement longitudinal (6).

3. Appareil selon la revendication 1, **caractérisé en ce que** lesdites première (18) et deuxième (20) roues sont respectivement une première et deuxième portion d'une roue unique, de forme telle que le rayon de la première portion de ladite roue unique est plus grand que le rayon de sa deuxième portion.

4. Appareil selon la revendication 3, **caractérisé en ce qu'**il comprend en outre une troisième roue discoïdale (22), avec axe horizontal, disposée de façon à supporter latéralement une portion supérieure du deuxième côté dudit élément de renforcement longitudinal (6).

5. Appareil selon la revendication 2, **caractérisé en ce que** lesdites première (18), deuxième (20) et troisième (22) roues sont respectivement une première, deuxième et troisième portion d'une roue unique (23), de forme telle que le rayon de la première portion de ladite roue unique (23) et plus grand que le rayon de sa troisième portion et que le rayon de sa troisième portion est plus grand que le rayon de sa deuxième portion.

6. Appareil selon la revendication 2, **caractérisé en ce que** lesdites deuxième (20) et troisième (22) roues sont respectivement une première et deuxième portion d'une roue unique, de forme telle que le rayon de la deuxième portion de ladite roue unique est plus grand que le rayon de sa première portion.

7. Appareil selon l'une quelconque des revendications précédentes, **caractérisé en ce que** ladite deuxième roue discoïdale (20) est pourvue, le long de sa circonférence externe, à contact avec ledit élément de renforcement longitudinal (6), d'un anneau interne (21) en matériau élastomérique.

8. Appareil selon la revendication 7, **caractérisé en ce que** ledit anneau interne (21) est pourvu sur sa périphérie d'un anneau métallique externe (19).

9. Appareil selon la revendication 8, **caractérisé en ce que** la surface de ladite deuxième roue (20) à contact avec ledit anneau interne (21) est moletée.

10. Appareil selon l'une quelconque des revendications précédentes, **caractérisé en ce que** ladite première roue discoïdale (18) s'appuie, durant le soudage, sur un chemin plan de soudage (9) formé sur ledit panneau en aluminium (8) pour accueillir ledit élément de renforcement longitudinal (6), et **en ce que** ledit au moins un système de guidage (14a, 14b) pour un faisceau laser de soudage est couplé avec un support (16) de l'axe (28) de ladite première roue discoïdale (18), de façon a suivre éventuelles variations de niveau du chemin plan de soudage (9) relevées par ladite première roue discoïdale (18).

11. Appareil selon la revendication 10, **caractérisé en ce que** ledit panneau en aluminium (8) est supporté, pendant le soudage, par un élément de soutien (10) comprenant au moins un bloc de matériau élastomérique disposé longitudinalement au dessous dudit chemin plan de soudage (9), de façon à s'opposer à la pression exercée par ledit système à roues et/ ou rouleaux.

12. Appareil selon la revendication 11, **caractérisé en ce que** ledit bloc en matériau élastomérique (10) est revêtu sur sa surface supérieure par une couche métallique (12), en correspondance de la région de contact avec ledit panneau en aluminium (8).

13. Appareil selon l'une quelconque des revendications de 10 à 12, **caractérisé en ce qu'**il est couplé avec ledit bras robotisé (4) par un système amortisseur de chocs (50, 52) qui permet, en ajustant la position verticale dudit bras robotisé (4), de maintenir ladite première roue discoïdale (18) en contact stable avec ledit chemin plan de soudage (9).

14. Appareil selon l'une quelconque des revendications précédentes, **caractérisé en ce que** lesdits rouleaux (24) avec axe vertical sont portés par un support (26) qui peut glisser horizontalement dans une direction perpendiculaire à la direction de soudage, de sorte que les rouleaux peuvent s'éloigner de l'élément de renforcement longitudinal (6), en permettant ainsi à l'appareil (2) entier d'être abaissé et soulevé, sans interférer avec une portion supérieure courbe de l'élément de renforcement longitudinal (6) même.

15. Appareil selon l'une quelconque des revendications précédentes, **caractérisé en ce que** ladite/lesdites roue/roues (18, 20, 22, 23) tourne/tournent autour d'un axe de rotation commun.

16. Appareil selon l'une quelconque des revendications précédentes, **caractérisé en ce que** ladite/lesdites roue/roues (18, 20, 22, 23) et lesdits rouleaux (24) avec axe vertical sont libres.

17. Appareil selon l'une quelconque des revendications précédentes, **caractérisé en ce que** ledit au moins un système de guidage (14a, 14b) pour un faisceau laser de soudage comprend une première (14a) et une deuxième (14b) tête de soudage, disposées latéralement par rapport à la direction de l'élément de renforcement longitudinal (6) et couplées avec un support (52) du système à roues et/ou à rouleaux pour positionner et serrer l'élément de renforcement longitudinal (6).

18. Appareil selon la revendication 17, **caractérisé en ce que** lesdites première (14a) et deuxième (14b) têtes de soudage sont couplées avec ledit support (52) par une pluralité de coulisseaux permettant, au cours d'une phase de calibrage de l'appareil, d'adapter l'appareil au modèle et à la taille de l'élément longitudinal (6) qui doit être soudé.

19. Appareil selon l'une quelconque des revendications précédentes, **caractérisé en ce qu'**il comprend au moins un détecteur électronique qui surveille en temps réel la qualité du soudage réalisé et génère un signal pour arrêter le procédé de soudage s'il relève un défaut dans le soudage.
